# EUROPEAN PATENT APPLICATION

(11) **EP 4 661 198 A1**
(43) Date of publication of application: **10.12.2025**
(21) Application number: 23920478.7
(22) Date of filing: 09.02.2023
(51) Int. Cl.: H01M 50/543, H01M 50/553, H01M 50/547, H01M 50/59

(54) **INSULATING ASSEMBLY, END COVER ASSEMBLY, ENERGY STORAGE APPARATUS, AND ELECTRIC DEVICE**

(71) Applicant: Shenzhen Hithium Energy Storage Technology Co., Ltd., Shenzhen, Guangdong 518110 (CN); Xiamen Hithium Energy Storage Technology Co., Ltd., Xiamen, Fujian 361100 (CN)
(72) Inventor: LIANG, Jinyun, Xiamen, Fujian 361100 (CN); WANG, Feng, Xiamen, Fujian 361100 (CN)
(74) Representative: Viering, Jentschura & Partner mbB Patent- und Rechtsanwälte
(86) International application number: PCT/CN2023/075284
(87) International publication number: WO 2024/164270

(57) **Abstract**

The present disclosure provides an insulation assembly, an end cover assembly, an energy storage device, and an electric device. The insulation assembly includes a pressing block, a terminal post, and an insulator. The insulator includes an insulator body and a first limiting portion. The insulator body has a first surface and a second surface disposed opposite to each other in a thickness direction. The insulator body defines a terminal post through-hole extending through the first surface and the second surface. The first limiting portion is disposed on the first surface. The first limiting portion surrounds an outer periphery of the terminal post through-hole and protrudes from the outer periphery of the terminal post through-hole along a circumferential direction of the terminal post through-hole. The terminal post passes through the terminal post through-hole. The first limiting portion circumferentially wraps a part of an outer peripheral surface of the terminal post in an axial direction. By means of the technical solution of the present disclosure, a joint between the terminal post and the insulator can have a good connection strength, so that the terminal post and the insulator have an excellent sealing performance.

## Description

### TECHNICAL FIELD

This disclosure relates to the field of energy storage, and in particular, to an insulation assembly, an end cap assembly, an energy storage device, and an electric device.

### BACKGROUND

With the development of clean energy, more and more devices use an energy storage device such as a secondary battery as a main energy source, such as, a lithium battery, a lithium iron phosphate energy storage battery, or the like. In an end cover assembly of an energy storage device, for insulation between a terminal post and a top cover, an insulator needs to be disposed between the terminal post and the top cover. Currently, a joint between a terminal post and an insulator is weak, which is likely to bring safety risks due to electrolyte leakage in a working environment due to a decrease in air tightness, and also affects a service life.

### SUMMARY

Embodiments of the present disclosure provide an insulation assembly, an end cap assembly, an energy storage device, and an electric device, which improve safety and service life, enable a joint between a terminal post and an insulation to have good connection strength, and enable the terminal post and the insulation to have excellent sealing performance.

According to a first aspect, the present disclosure provides an insulation assembly. The insulation assembly includes a pressing block, a terminal post, and an insulation. The insulation includes an insulation body and a first limiting portion. The insulator body has a first surface and a second surface disposed opposite to each other along a thickness direction of the insulator body. The first surface is a surface facing the pressing block. The insulator body defines a terminal post through-hole extending through the first surface and the second surface. The first limiting portion is disposed on the first surface. The first limiting portion surrounds an outer periphery of the terminal post through-hole and protrudes from the outer periphery of the terminal post through-hole along a circumferential direction of the terminal post through-hole. The terminal post passes through the terminal post through-hole. The first limiting portion circumferentially wraps a part of an outer peripheral surface of the terminal post in an axial direction.

It can be understood that, by providing the first limiting portion in the circumferential direction of the terminal post through-hole, the terminal post can be in contact with the first limiting portion when the terminal post passes through the terminal post through-hole. The first limiting portion is deformed due to the extrusion of the terminal post, so that the first limiting portion is flipped and deformed towards a passing-out direction of the terminal post, thereby enabling the first limiting portion closely wrapping a part of the outer peripheral surface of the terminal post, increasing the connection strength between the terminal post and the insulator, enabling a tight and reliable connection between the first limiting portion and the terminal post, and facilitating further improving the overall sealing performance of the insulation assembly. In addition, by providing the first limiting portion, the position-limiting and fixing effect of the insulator on the terminal post can also be enhanced, and the risk of misalignment when the terminal post and the insulator are assembled is reduced.

In a possible embodiment, in a thickness direction of the insulator, a height of the first limiting portion protruding from the first surface is ≥ 0.1 mm, and ≤ 3mm.

With this arrangement, a sufficient contact area can be provided between the first limiting portion and the terminal post, so that the matching between the insulator and the terminal post is more compact and reliable, so as to sufficiently reduce the misalignment of the terminal post during assembly, ensure the sealing effect of the insulation assembly, reduce the leakage of gas and liquid from the insulation assembly, and ensure the safety performance of the battery.

In a possible embodiment, a thickness of the first limiting portion is ≥ 0.01 mm and ≤ 0.6 mm. With this configuration, the first limiting portion can have sufficient wrapping force when being assembled with the terminal post, and can fully contact the terminal post.

In a possible embodiment, the first limiting portion is elastic, one end of the first limiting portion away from the insulator body is enlarged by the terminal post, and the one end of the first limiting portion away from the insulator body wraps a part of an outer peripheral surface of the terminal post.

In other words, when the insulator and the terminal post are fully assembled, the upper end of the first limiting portion is in a tensioned state. With this arrangement, the first limiting portion may be elastically deformed and expanded outward when being pressed by the terminal post, so that the one end of the first limiting portion away from the insulator body 31a is splayed, and tightly wraps a part of the outer peripheral surface of the terminal post, so that good sealing performance can be achieved between the terminal post and the insulator.

In a possible embodiment, the insulator further includes a second limiting portion. The second limiting portion surrounds a periphery of the insulator body and protrudes from the first surface of the insulator body along a circumferential direction of the insulator body. The second limiting portion and the insulator body cooperatively define an accommodating groove for accommodating the pressing block.

It can be understood that, by providing the second limiting portion disposed circumferentially around the outer periphery of the insulator body, the second limiting portion and the insulator body can cooperatively define an accommodating groove for accommodating the pressing block. When the pressing block is placed in the accommodating groove, the second limiting portion can abut against an outer periphery of the pressing block, thereby limiting the movement of the pressing block in the length direction of the insulator and in the width direction of the insulator, thus achieving a good limiting effect.

In a possible embodiment, in the thickness direction of the insulator body, a height of the second limiting portion protruding from the first surface is ≥ 0.5 mm and ≤ 5.5 mm.

For example, a height of the second limiting portion protruding from the first surface may be 1.2 mm. It can be understood that, the lower limit of the height of the second limiting portion protruding from the first surface is set to 0.5 mm, so that the second limiting portion and the insulator body can cooperatively define an accommodating groove for installing the pressing block, thereby achieving a certain limiting effect when installing the pressing block. The upper limit of the height of the second limiting portion protruding from the first surface is set to 5.5 mm, so that the protruding from extent of the second limiting portion relative to the insulator body will not be too large, and thus the electrical connection between the pressing block and the device outside the energy storage device will not be affected after the pressing block and the insulator are assembled.

In a possible embodiment, a height of the second limiting portion protruding from the first surface is greater than a height of the first limiting portion protruding from the first surface.

With this arrangement, the second limiting portion can have a sufficient protruding from height relative to the first limiting portion, so that the second limiting portion can have a sufficient contact area with the pressing block, thereby effectively limiting the movement of the pressing block in a direction parallel to the insulator body.

In a possible embodiment, a difference between the height of the second limiting portion protruding from the first surface and the height of the first limiting portion protruding from the first surface is ≥ 0.1 mm and ≤ 3.5 mm.

With this arrangement, both the sealing performance of the terminal post and a creepage distance between the pressing block and the smooth aluminum sheet can be improved, thereby improving the safety performance of the energy storage device.

In a possible embodiment, the insulator further includes a third limiting portion. The third limiting portion is disposed on the second surface. The third limiting portion surrounds a periphery of the terminal post through-hole and protrudes from the periphery of the terminal post through-hole along the circumferential direction of the terminal post through-hole. The insulation assembly further includes a sealing ring, the sealing ring is sleeved on the outer periphery of the terminal post, and the sealing ring abuts against the third limiting portion.

It can be understood that, by providing the third limiting portion, the third limiting portion can closely abut against a first sealing portion of the sealing ring, so as to fully ensure the contact area between the third limiting portion and the sealing ring, and improve the connection strength between the whole sealing ring and the insulator. The third limiting portion can also press the sealing ring in cooperation with the terminal post from two sides of the sealing ring in the thickness direction of the sealing ring, thereby effectively improving the sealing performance of the insulation assembly as a whole.

In a possible embodiment, the third limiting portion defines a notch, and the notch is in communication with the terminal post through-hole. The second surface defines a connection groove, and the connection groove communicates the notch with a periphery of the second surface of the insulation assembly.

It can be understood that, by enabling the notch to communicate with the connection groove, the notch and the connection groove can cooperatively define an exhaust passage to communicate the terminal post through-hole with the external environment. Thus, when the insulation assembly is riveted and pressed, the air between the sealing ring and the insulator can be guided to be discharged to the external environment through the exhaust passage defined by the notch and the connection groove, so that the insulation assembly can be vented smoothly, the problem of poor airtightness of the insulation assembly caused by local air bubbles in the insulation assembly is avoided, and the sealing performance of the insulation assembly is effectively improved.

In one possible embodiment, the notches include a first notch and a second notch. In a width direction of the insulator, the first notch is spaced apart from and symmetrical to the second notch. The connection groove includes a first connection groove and a second connection groove, the first connection groove communicates the first notch with the periphery of the second surface of the insulation assembly, and the second connection groove communicates the second notch with the periphery of the second surface of the insulation assembly.

Thus, the first notch and the first connection groove can cooperatively define an exhaust passage, and the second notch and the second connection groove can cooperatively define another exhaust passage. The two exhaust passages are also symmetrically disposed, so that the two exhaust passages have a better structure consistency, and air between the sealing ring and the insulator can be discharged from two sides in a width direction of the insulator, respectively, and thus the exhaust process of the insulation assembly is relatively uniform.

In a possible embodiment, the insulator further includes a cover portion, and the insulator body includes a first end and a second end disposed opposite to each other in a length direction of the insulator. The terminal post through-hole is defined closed to the first end, and the cover portion is connected a part of the second limiting portion located at the second end. The cover portion, the second limiting portion, and the insulator body cooperatively define a cavity, where the cavity is a part of the second limiting portion. A hollow hole extending through the first surface and the second surface is defined closed to the second end, and the hollow hole is in communication with the cavity.

It may be understood that, when the energy storage device is overcharged, excessive heat or increasing internal pressure inside the energy storage device due to decomposition of the electrolyte may lead to fire or explosion of the energy storage device. Thus, by providing the stimulus-response member, before the energy storage device is out of control, the stimulus-response member can be used to short-circuit the positive electrode and the housing, the negative electrode and the housing, or the positive electrode and the negative electrode, thereby preventing the energy storage device from continuing to be charged.

Specifically, under normal temperature, when the energy storage device is normally charged, the pressure inside the energy storage device is less than a preset threshold value, the stimulus-response member body maintains a natural state, and a protruding direction of the stimulus-response member body is towards the lower plastic. When the energy storage device is over-charged, the pressure inside the energy storage device is greater than the preset threshold value, the stimulus-response member body is flipped under the effect of the pressure inside the energy storage device, and the protruding direction of the stimulus-response member body is converted from being towards the lower plastic to being towards the insulation assembly. As such, the protrusion connected to the stimulus-response member body is in contact with the pressing block, and the stimulus-response member is electrically connected to the pressing block. At this time, the conductive pressing blocks of the positive electrode and the negative electrode are short-circuited, so that the energy storage device is short-circuited. Since a large short-circuit current can blow a fuse in a main loop of the energy storage device, an overcharge state of the energy storage device is stopped, and safety of the energy storage device in overcharging is improved.

In a possible embodiment, a U-shaped groove is defined in the second surface. The U-shaped groove is located at the second end, the U-shaped groove is located outside a periphery of the hollow hole, and the U-shaped groove is bent and extends along a circumferential direction of the second end.

It can be understood that, by defining the U-shaped groove in the insulator body and making the U-shaped groove extend against the outer periphery of the insulator body, the material required for preparing the insulator body can be reduced without interfering with the fitting relationships between the remaining structures of the insulator body and other components, thereby reducing the weight of the insulator body, and facilitating the lightweight of the insulation assembly.

In one possible embodiment, the insulator further includes at least one reinforcing rib, the at least one reinforcing rib is disposed on a bottom wall of the U-shaped groove, and the at least one reinforcing rib is located in a bend region of the U-shaped groove.

It can be understood that, by providing the reinforcing rib inside the U-shaped groove, the strength of the inner wall of the U-shaped groove can be improved without increasing the wall thickness of the U-shaped groove. At the same time, the problem of distortion and deformation of the insulator due to uneven stress distribution, which is caused by uneven thickness of the second end due to the arrangement of the U-shaped groove, can be overcome, and it is ensured that the space enclosed by the U-shaped groove will not be retracted in the process of using the insulation assembly, and the reliability is good.

In one possible embodiment, a height of each of the at least one reinforcing rib is less than a depth of the U-shaped groove relative to the second surface.

With this arrangement, the reinforcing rib will not exceed outside the U-shaped groove, thus preventing warpage of the insulator when being assembled with other components, which is beneficial to improving the flatness of the insulator.

According to a second aspect, the present disclosure further provides an end cap assembly, where the end cap assembly includes the above-mentioned insulation assembly.

In a possible embodiment, the end cap assembly further includes a stimulus-response member, and the stimulus-response member and the insulation assembly are stacked. The stimulus-response member includes a stimulus-response member body and a protrusion, and the protrusion protrudes from the stimulus-response member body. The insulator body includes a first end and a second end disposed opposite to each other in a length direction of the insulator, the terminal post through-hole is closed to the first end, and a hollow hole extending through the first surface and the second surface is defined closed to the second end. The hollow hole is in communication with the accommodating groove, the hollow hole is used for the stimulus-response member to pass through. A diameter of the hollow hole is greater than that of a diameter of the protrusion, and a diameter of the hollow hole is less than a diameter of the stimulus-response member body.

It can be understood that, since the diameter of the hollow hole is less than the diameter of the stimulus-response member body, a part of the stimulus-response members can be blocked by the lower plastic, so that the lower plastic can have a certain limiting effect on the stimulus-response member, and prevent the stimulus-response member from contacting the pressing block due to displacement and shaking of the stimulus-response member in a normal state, which may result in that the normal charging state of the energy storage device is terminated. In addition, since the diameter of the hollow hole is greater than the diameter of the protrusion, when the stimulus-response member is flipped, the protrusion can smoothly pass through the hollow hole and contact the pressing block, so that the stimulus-response member is electrically connected to the pressing block, and the energy storage device is prevented from continuing to be charged.

In a third aspect, the present disclosure further provides an end cap assembly, where the end cap assembly includes the above-mentioned insulation assembly.

In a possible embodiment, the end cap assembly further includes a stimulus-response member, and the stimulus-response member and the insulation assembly are stacked. The stimulus-response member includes a stimulus-response member body and a protrusion, and the protrusion protrudes from the stimulus-response member body. The hollow hole is used for the stimulus-response member to pass through.

In a fourth aspect, the present disclosure also provides an energy storage device, which includes the described end cover assembly.

In a fifth aspect, the present disclosure further provides an electric device, where the electric device includes the above-mentioned energy storage device.

It can be understood that, by providing the first limiting portion in the circumferential direction of the terminal post through-hole, the terminal post can be in contact with the first limiting portion when the terminal post passes through the terminal post through-hole. The first limiting portion is deformed due to the extrusion of the terminal post, so that the first limiting portion is flipped and deformed towards a passing-out direction of the terminal post, thereby enabling the first limiting portion closely wrapping a part of the outer peripheral surface of the terminal post, increasing the connection strength between the terminal post and the insulator, enabling a tight and reliable connection between the first limiting portion and the terminal post, and facilitating further improving the overall sealing performance of the insulation assembly. In addition, by providing the first limiting portion, the position-limiting and fixing effect of the insulator on the terminal post can also be enhanced, and the risk of misalignment when the terminal post and the insulator are assembled is reduced.

### BRIEF DESCRIPTION OF THE DRAWINGS

To describe the technical solutions of the present disclosure more clearly, the following briefly introduces accompanying drawings required for describing embodiments. Apparently, the accompanying drawings in the following description show merely some embodiments of the present disclosure, and a person of ordinary skill in the art may still derive other drawings from these accompanying drawings without creative efforts.
FIG. 1 is a schematic structural view of an electric device according to an embodiment of the present disclosure.
FIG. 2 is a schematic structural view of an energy storage device illustrated in FIG. 1.
FIG. 3 is an exploded schematic view of the energy storage device illustrated in FIG. 2.
FIG. 4 is a schematic structural view of an end cover assembly of the energy storage device illustrated in FIG. 2.
FIG. 5 is an exploded schematic view of the end cap assembly illustrated in FIG. 4.
FIG. 6 is another schematic structural view of a smooth aluminum sheet of the end cover assembly illustrated in FIG. 5.
FIG. 7 is a schematic structural view of an insulation assembly illustrated in FIG. 5.
FIG. 8 is a schematic cross-sectional view taken along cut line A-A in FIG. 4.
FIG. 9 is a schematic structural view of the insulator illustrated in FIG. 7 viewed from a direction.
FIG. 10 is a schematic structural view of the insulator illustrated in FIG. 7 viewed from another direction.
FIG. 11 is a schematic structural view of the insulator illustrated in FIG. 7 viewed from another direction.
FIG. 12 is a partial structural schematic view of the insulation assembly illustrated in FIG. 5.
FIG. 13 is a schematic cross-sectional view taken along cut line B-B in FIG. 11.
FIG. 14 is an another schematic structural view of the insulator illustrated in FIG. 7.

Descriptions of reference signs
electrical device 300, power system 310, energy storage device 200, housing 210, cell 220, end cover assembly 230, lower plastic 240, smooth aluminum sheet 250, stimulus-response member 260, explosion-proof valve 270, insulating assembly 100, first through-hole 2410, second through-hole 2420, smooth aluminum sheet body 2510, boss 2520, boss 2521, boss 2522, third surface 2511, fourth surface 2512, third end 2513, fourth end 2514, first cavity 2515, second cavity 2516, explosion-proof valve through-hole 2517, third through-hole 2523, first mounting hole 2524, fourth through-hole 2525, second mounting hole 2526, liquid injection hole 2518, stimulus-response member 260, stimulus-response member 2610, stimulus-response member body 2620, protrusion 2612, stimulus-response member body 2621, protrusion 2622, insulation assembly 100a, insulation assembly 100b, terminal post 10a, pressing block 20a, insulator 30a, sealing ring 40a, post body 11a, base 12a, connection portion 21a, extension portion 22a, first sealing portion 41a, second sealing portion 42a, insulator body 31a, second limiting portion 32a, first limiting portion 33a, third limiting portion 34a, cover portion 35a, first surface 311a, second surface 312a, first end 313a, second end 314a, terminal post through-hole 315a, U-shaped groove 316a, reinforcing rib 36a, hollow hole 317a, notch 341a, connection groove 319a, first notch 342a, second notch 343a, first connection groove 3191a, second connection groove 3192a, terminal post 10b, pressing block 20b, insulator 30b, sealing ring 40b, accommodating groove W1, cavity 318a, height H1 of the first limiting portion 33a protruding from the first surface 311a, height H2 of the second limiting portion 32a protruding from the first surface 311a, diameter L1 of the hollow hole 317a, diameter L2 of the protrusion 2612, diameter L3 of the stimulus-responsive member body 2611

### DETAILED DESCRIPTION

For ease of understanding, terms involved in embodiments of the present disclosure are first explained as follows.

"And/or" merely describes a relationship between associated objects, indicating that there can be three possible relationships. For example, "A and/or B" can mean: A exists alone, both A and B exist together, or B exists alone.

"Multiple" refers to two or more than two.

"Connect" may be understood in a broad sense. For example, if A is connected to B, it can mean that A is directly connected to B, or that A is indirectly connected to B through an intermediate medium.

Embodiments of the present disclosure will be clearly described hereinafter with reference to the drawings.

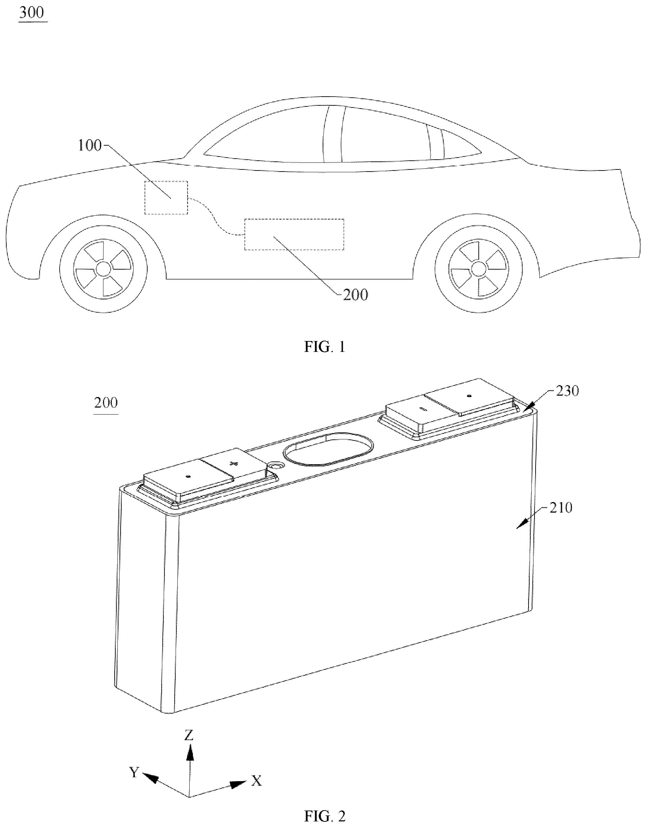

Reference is made to FIG. 1, which is a schematic structural view of an electric device 300 according to an embodiment of the present disclosure. The electric device 300 includes a power system 310 and an energy storage device 200. The power system 310 is electrically connected to the energy storage device 200, and the energy storage device 200 is configured to provide a power source for the power system 310.

In the following description, for illustrative purpose, the electric device 300 is a vehicle. The vehicle may be a fuel-powered vehicle, a gas-fired vehicle, or a new energy vehicle. The new energy vehicle may be a pure electric vehicle, a hybrid vehicle, an extended range vehicle, or the like. The vehicle includes a battery, a controller, and a motor. The battery is used for supplying power to the controller and the motor, and is used as an operating power supply and a driving power supply of the vehicle. For example, the battery is used for working electricity requirements during starting, navigation, and operation of the vehicle. For example, the battery supplies power to the controller, the controller controls the battery to supply power to the motor, and the motor receives and uses the power of the battery as a driving power source of the vehicle, either fully or partially supplanting gasoline or natural gas to provide driving power for the vehicle.

It may be understood that, the energy storage device 200 may include, but is not limited to, a battery cell, a battery module, a battery pack, a battery system, and the like. When the energy storage device 200 is a single battery, the energy storage device 200 may be a square battery. For illustrative purpose, in the following description, the energy storage device 200 is a square battery, but it may be understood that the energy storage device 200 is not limited thereto.

It may be noted that the vehicle is only one use scenario of the energy storage device 200 provided in the present disclosure, and in other scenarios, the energy storage device 200 may also be used in other electronic devices or mechanical devices, and the present disclosure does not specifically limit the use scenario of the energy storage device 200.

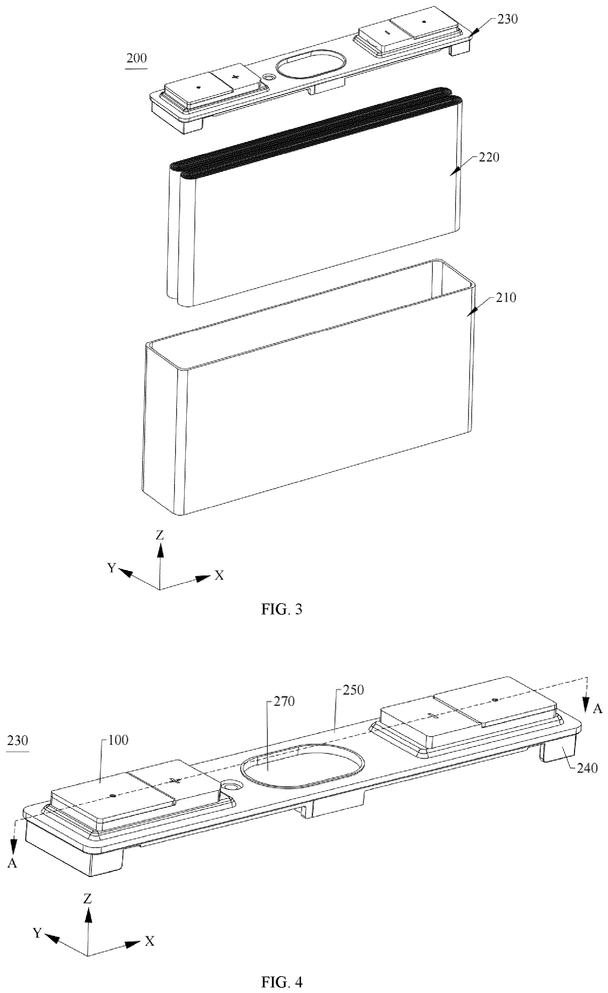

Reference is made to Figs. 2 and 3 together, where FIG. 2 is a schematic structural view of the energy storage device illustrated in FIG. 1, and FIG. 3 is an exploded schematic view of the energy storage device illustrated in FIG. 2. For ease of description, a length direction of the energy storage device 200 illustrated in FIG. 2 is defined as an X-axis direction (hereinafter X direction for short), a width direction of the energy storage device 200 is defined as a Y-axis direction (hereinafter Y direction for short), and a height direction of the energy storage device 200 is defined as a Z-axis direction (hereinafter Z direction for short).

The energy storage device 200 may include a housing 210, a cell 220, and an end cover assembly 230. An opening is defined at one end of the housing 210, the cell 220 is installed inside the housing 210, and the end cover assembly 230 is connected to the opening of the housing 210 and is in fit with the housing 210 to encapsulate the cell 220. Exemplarily, the housing 210 is a metal housing 210, such as an aluminum housing, and certainly, the housing 210 may also be made of other materials. The cell 220 may include a positive electrode, a negative electrode, and a separator located between the positive electrode and the negative electrode. The positive electrode, the separator, and the negative electrode are stacked in sequence and wound to form the cell 220.

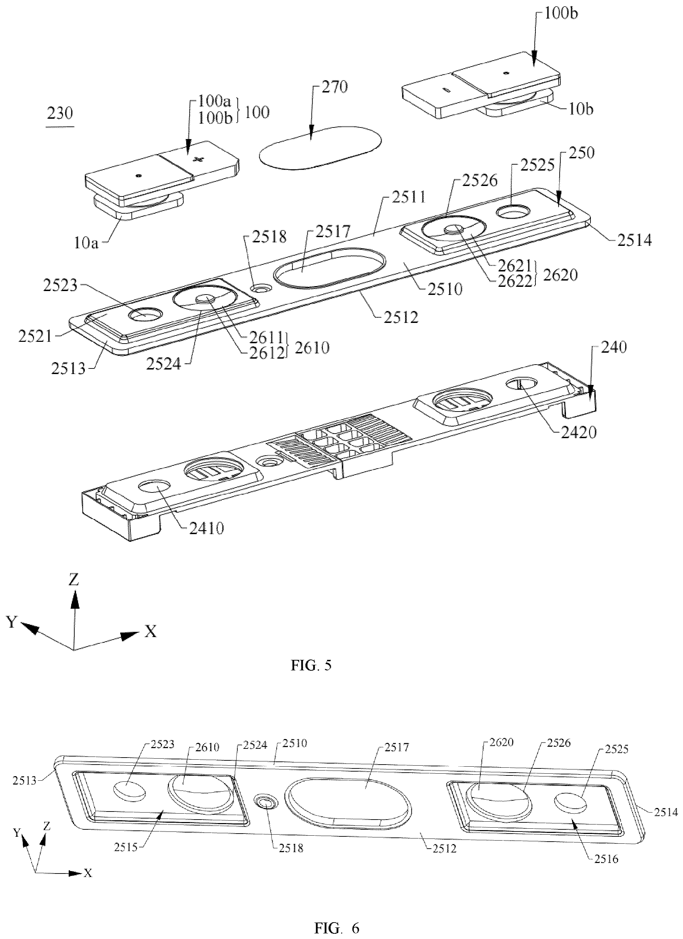

Reference is made to Figs. 4 and 5 together, where FIG. 4 is a schematic structural view of an end cap assembly 230 of the energy storage device 200 illustrated in FIG. 2, and FIG. 5 is an exploded schematic view of the end cap assembly 230 illustrated in FIG. 4. The end cap assembly 230 may include a lower plastic 240, a smooth aluminum sheet 250, a stimulus-response member 260, an explosion-proof valve 270, and an insulation assembly 100.

The lower plastic 240 defines a first through-hole 2410 and a second through-hole 2420. The first through-hole 2410 and the second through-hole 2420 are spaced apart from each other in a length direction of the lower plastic 240 (i. e. in the X direction). The first through-hole 2410 is used for a terminal post 10a to pass through, and the second through-hole 2420 is used for a terminal post 10b to pass through.

Reference is made to Figs. 5 and 6, where FIG. 6 is another schematic structural view of the smooth aluminum sheet 250 of the end cover assembly 230 illustrated in FIG. 5.

The smooth aluminum sheet 250 is stacked with the lower plastic 240, and the smooth aluminum sheet 250 is located at one side of the lower plastic 240 away from the cell 220. The smooth aluminum sheet 250 is connected to the opening of the housing 210. Exemplarily, the smooth aluminum sheet 250 may be welded to the housing 210 to isolate the interior of the energy storage device 200 from the exterior of the energy storage device 200.

The smooth aluminum sheet 250 includes a smooth aluminum sheet body 2510 and a boss 2520. The boss 2520 is implemented as two bosses, which are a boss 2521 and a boss 2522. The boss 2521 and boss 2522 may be of the same or similar structure, symmetrical or partially symmetrical structures, or different structures. In embodiments of the present disclosure, one of the boss 2521 and the boss 2522 is a positive electrode boss, and the other one of the boss 2521 and the boss 2522 is a negative electrode boss. In the following description, for illustrative purpose, the boss 2521 is a positive electrode boss, the boss 2522 is a negative electrode boss, and the boss 2521 and the boss 2522 are mirror-symmetric. However, it may be understood that the present invention is not limited thereto.

The smooth aluminum sheet body 2510 has a third surface 2511 and a fourth surface 2512 disposed opposite to each other, where the third surface 2511 is a surface of the smooth aluminum sheet body 2510 that faces the top patch insulation assembly 100, and the fourth surface 2512 is a surface of the smooth aluminum sheet body 2510 that faces the lower plastic 240. The smooth aluminum sheet body 2510 includes a third end 2513 and a fourth end 2514, and the third end 2513 and the fourth end 2514 are spaced apart in the length direction of the smooth aluminum sheet body 2510 (i. e. in the X direction).

The smooth aluminum sheet body 2510 defines a first cavity 2515 and a second cavity 2516. The first cavity 2515 is disposed at the third end 2513, the first cavity 2515 is recessed in a direction from the fourth surface 2512 towards the third surface 2511, and the first cavity 2515 is used to accommodate the lower plastic 240 and other components in the energy storage device 200. The second cavity 2516 is disposed at the fourth end 2514, the second cavity 2516 is recessed in a direction from the fourth surface 2512 towards the third surface 2511, and the second cavity 2516 is used for accommodating the lower plastic 240 and other components in the energy storage device 200.

The boss 2521 is disposed at the third end 2513 of the smooth aluminum sheet body 2510, and the boss 2521 protrudes from the third surface 2511 of the smooth aluminum sheet body 2510. By providing the boss 2521 protruding from the smooth aluminum sheet body 2510, a good reminding effect can be achieved, so that when assembling the energy storage device 200, a worker can position other components without much attention by aligning various components of the smooth aluminum sheet 250, thereby improving the assembling efficiency of the energy storage device 200 and the accuracy of assembling various components in the energy storage device 200. Exemplarily, in a direction from the third surface 2511 of the smooth aluminum sheet body 2510 towards the insulation assembly 100, a dimension of an outer diameter of the boss 2521 decreases gradually.

The boss 2521 defines a third through-hole 2523 and a first mounting hole 2524, and the third through-hole 2523 and the first mounting hole 2524 are opposite to each other in the X direction. The third through-hole 2523 extends through the boss 2521 in the Z direction. The third through-hole 2523 is in communication with the first cavity 2515. The third through-hole 2523 is disposed corresponding to a first through-hole 2410 of the lower plastic 240, and the third through-hole 2523 is used for the terminal post 10a to pass through. The first mounting hole 2524 extends the boss 2521 in the Z direction. The first mounting hole 2524 is in communication with the first cavity 2515, and the first mounting hole 2524 is used for connecting the stimulus-response members 2610.

Since the stimulus-response member 2610 may have a stimulus-response deformation in response to an increase in pressure inside the energy storage device 200, when the gas inside the energy storage device 200 protrudes from a preset pressure threshold, the stimulus-response member 2610 may have a stimulus-response deformation to be in contact with a metal conductive pressing block (not illustrated), so that external short-circuit of the positive and negative electrode assemblies occurs, and then due to a strong short-circuit current, the stimulus-response member and the bottom of the metal conductive pressing block undergoes fuse-cleaving, thereby returning to an open-circuit state. In this way, the energy storage device 200 may be prevented from being overcharged, and therefore explosion of the energy storage device 200 can be avoided.

The boss 2522 is disposed at the fourth end 2514 of the smooth aluminum sheet body 2510, and the boss 2522 protrudes from the third surface 2511 of the smooth aluminum sheet body 2510. By providing the boss 2522 protruding from the smooth aluminum sheet body 2510, a good reminding effect can be achieved, so that when assembling the energy storage device 200, a worker can position other components without much attention by aligning various components of the smooth aluminum sheet 250, thereby improving the assembling efficiency of the energy storage device 200 and the accuracy of assembling various components in the energy storage device 200. Exemplarily, in a direction from the third surface 2511 of the smooth aluminum sheet body 2510 towards the insulation assembly 100, a dimension of an outer diameter of the boss 2522 decreases gradually.

The boss 2522 defines a fourth through-hole 2525 and a second mounting hole 2526, and the fourth through-hole 2525 extends through the boss 2522 in the Z direction. The fourth through-hole 2525 is in communication with the second cavity 2516, and the fourth through-hole 2525 is defined corresponding to the second through-hole 2420 of the lower plastic 240. The fourth through-hole 2525 is used for the terminal post 10b to pass through. The second mounting hole 2526 extends through the boss 2522 in the Z direction, the second mounting hole 2526 is in communication with the second cavity 2516, and the second mounting hole 2526 is used for connecting the stimulus-response member 2620.

The smooth aluminum sheet body 2510 defines an explosion-proof valve through-hole 2517, and the explosion-proof valve through-hole 2517 extends through the smooth aluminum sheet body 2510 in the Z direction. The explosion-proof valve through-hole 2517 is located between the boss 2521 and the boss 2522, and every two of the explosion-proof valve through-hole 2517, the boss 2521, and the boss 2522 are disposed spaced from each other. The explosion-proof valve through-hole 2517 is used for connecting the explosion-proof valve 270.

The smooth aluminum sheet body 2510 defines a liquid injection hole 2518, the liquid injection hole 2518 is located between the boss 2521 and the explosion-proof valve through-hole 2517, and the liquid injection hole 2518 is spaced apart from the boss 2521 and the explosion-proof valve through-hole 2517.

Reference is still made to Figs. 4 and 5, there may be two stimulus-response members 260, which are a stimulus-response member 2610 and a stimulus-response member 2620, respectively.

The stimulus-response member 2610 can include a stimulus-response member body 2611and a protrusion 2612, where the stimulus-response member body 2611 is connected in the first mounting hole 2524 and the stimulus-response member body 2611 protrudes towards the lower plastic 240. The protrusion 2612 protrudes from the stimulus-response member body 2611.

The stimulus-response member 2620 can include a stimulus-response member body 2621 and a protrusion 2622, where the stimulus-response member body 2621 is connected in the second mounting hole 2526. The stimulus-response member body 2621 protrudes towards the lower plastic 240. The protrusion 2622 protrudes from the stimulus-response member body 2621. The stimulus-response member 2620 and the stimulus-response member 2620 are spaced apart in the X direction.

In embodiments of the present disclosure, there are two insulation assemblies 100, which are respectively an insulation assembly 100a and an insulation assembly 100b. The two insulation assemblies 100a and 100b may be a positive insulation assembly and a negative insulation assembly, respectively. In embodiments of the present disclosure, the insulation assembly 100a and the insulation assembly 100b have substantially the same structure, and only the insulation assembly 100a on the positive electrode side is taken as an example for detailed description in the following. In the case of no conflict, the description of one insulation assembly 100a in the following can be applied to the other insulation assembly 100b.

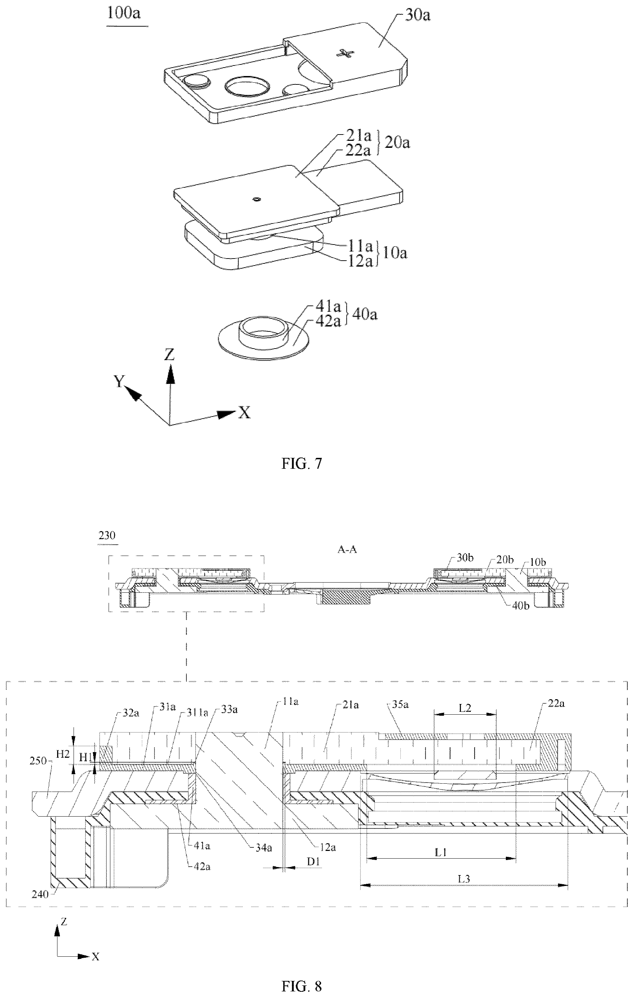

Reference is made to Figs. 7 and 8 in combination, where FIG. 7 is a schematic structural view of the insulation assembly 100a illustrated in FIG. 5, and FIG. 8 is a schematic cross-sectional view taken along cut line A-A illustrated in FIG. 4. The insulation assembly 100a may include a terminal post 10a, a pressing block 20a, an insulator 30a, and a sealing ring 40a. The terminal post 10a, the pressing block 20a, the insulator 30a, and the sealing ring 40a illustrated in Figs. 7 and 8 are respectively a positive terminal post, a positive pressing block, a positive insulator, and a positive sealing ring on a positive insulation assembly side.

The terminal post 10a may include a post body 11a and a base 12a. One end of the post body 11a is connected to the base 12a, and the other end of the post body 11a passes through the pressing block 20a to be connected to the pressing block 20a. The post body 11a has a cross-sectional area less than that of the base 12a, i. e., the projection of the post body 11a onto the base 12a falls within the base 12a. The cross-sectional area is a cross-sectional area taken along a plane parallel to the base 12a. Exemplarily, a height of the base 12a is less than the height of the post body 11a. By setting the height of the base 12a to be less than the height of the post body 11a, the space occupied by the base 12a in the insulation assembly 100a can be reduced, and the volume energy density of the insulation assembly 100a can be improved.

The pressing block 20a may include a connection portion 21a and an extension portion 22a. One end of the extension portion 22a is connected to the connection portion 21a, and the other end of the extension portion 22a extends into the insulator 30a. A height of the extension portion 22a is less than that of the connection portion 21a. In other words, the connection portion 21a may be a portion of the pressing block 20a exposed to the external environment and connected to the terminal post 10a, and the extension portion 22a may be a portion of the pressing block 20a in fit with the insulator 30a. By providing the pressing block 20a, on the one hand, the terminal post 10a can be fixed, so as to prevent the terminal post 10a from being deformed under the action of an external force, and on the other hand, a welding area between the terminal post 10a and an external component can be increased, thereby ensuring the welding strength of the energy storage device 200.

The sealing ring 40a may include a first sealing portion 41a and a second sealing portion 42a. Each of the first sealing portion 41a and the second sealing portion 42a has a hollow ring shape. The first sealing portion 41a is sleeved on the post body 11a of the terminal post 10a. One end of the first sealing portion 41a is connected to the second sealing portion 42a, and the other end of the first sealing portion 41a abuts on the insulator 30a. The second sealing portion 42a is sleeved on the post body 11a of the terminal post 10a, and one end of the second sealing portion 42a away from the first sealing portion 41a abuts against the base 12a of the terminal post 10a.

The cross-sectional area of the first sealing portion 41a is less than that of the second sealing portion 42a, i. e., the projection of the first sealing portion 41a on the second sealing portion 42a falls within the second sealing portion 42a. The cross-sectional area is a cross-sectional area taken along a plane parallel to the second sealing portion 42a. By means of providing the sealing ring 40a that has two parts, i. e. the first sealing portion 41a and the second sealing portion 42a, enabling the first sealing portion 41a to abut against the insulator 30a, and enabling the second sealing portion 42a to abut against the base 12a of the terminal post 10a, the contact area between the sealing ring 40a and the terminal post 10a can be increased, the strength of the connection between the whole sealing ring 40a and the terminal post 10a is improved, and the terminal post 10a is prevented from twisting. In addition, the two sides of the seal ring 40a in the thickness direction of the seal ring 40a (i. e. the Z direction) can be pressed by the insulator 30a and the terminal post 10a respectively, thereby effectively improving the sealing performance of the whole insulation assembly 100a.

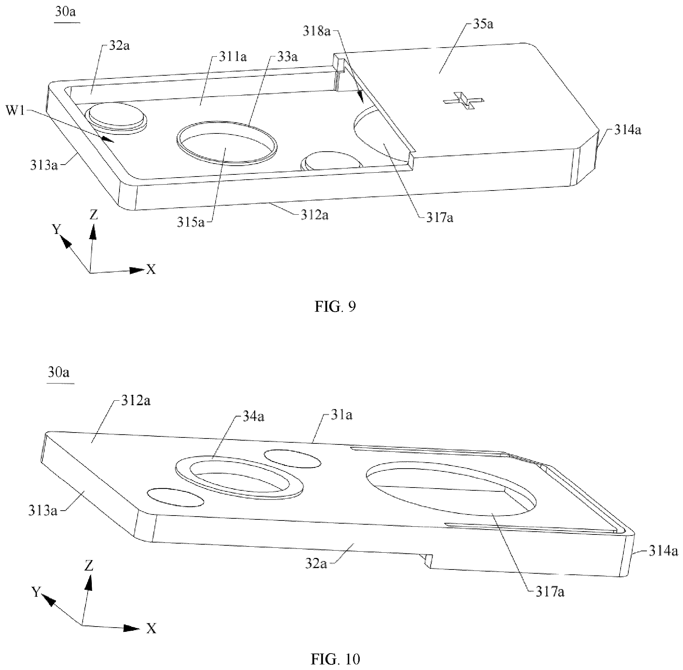

Reference is made to Figs. 8, 9 and 10, where FIG. 9 is a schematic structural view of the insulator 30a illustrated in FIG. 7 viewed from a direction, and FIG. 10 is a schematic structural view of the insulator 30a illustrated in FIG. 7 viewed from another direction. The insulator 30a may include an insulator body 31a, a second limiting portion 32a, a first limiting portion 33a, a third limiting portion 34a, and a cover portion 35a.

The insulator body 31a may have a first surface 311a and a second surface 312a, where the first surface 311a is a surface of the insulator body 31a facing the pressing block 20a, and the second surface 312a is a surface of the insulator body 31a facing the seal ring 40a. The insulator body 31a can further have a first end 313a and a second end 314a disposed opposite to each other in the length direction of the insulator 30a (i. e., X-direction).

A terminal post through-hole 315a is defined at the first end 313a. The terminal post through-hole 315a extends through the first surface 311a and the second surface 312a of the insulator body 31a in the Z-direction. The terminal post through-hole 315a is used for the terminal post 11a of the terminal post 10a to pass through.

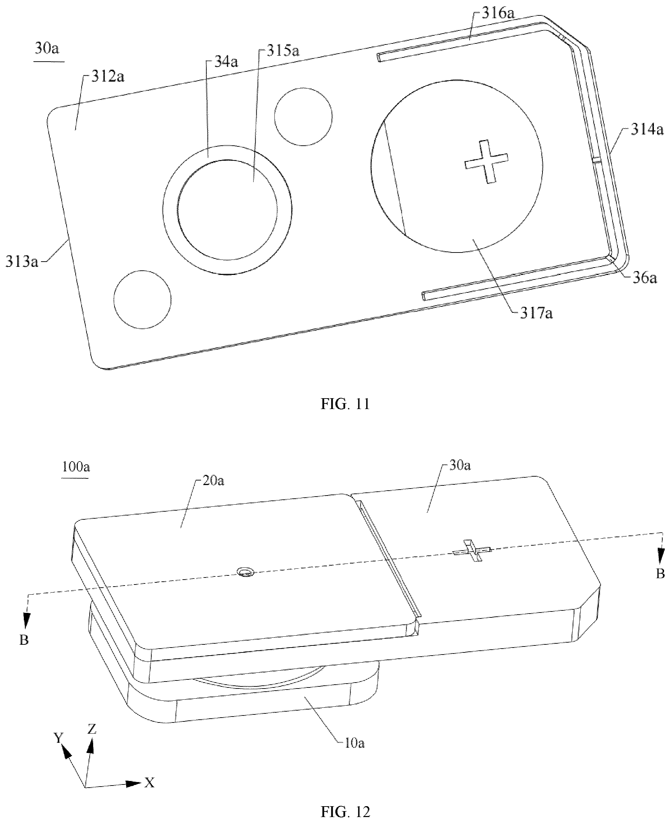

Reference is made to FIG. 11, where FIG. 11 is a schematic structural view of the insulator 30a illustrated in FIG. 7 viewed from another direction. A U-shaped groove 316a is defined at the second end 314a. The U-shaped groove 316a is recessed from the second surface 312a of the insulator body 31a to the first surface 311a of the insulator body 31a. The U-shaped groove 316a is located outside a periphery of the hollowed-out hole 317a, and the U-shaped groove 316a is bent and extends along the circumferential direction of the second end 314a. Certainly, in other embodiments, the U-shaped groove 316a may also be in an L shape or other shapes, and embodiments of the present disclosure does not strictly limit the specific shape of the U-shaped groove 316a.

It can be understood that, by defining the U-shaped groove 316a on the insulator body 31a and making the U-shaped groove 316a extend against the outer periphery of the insulator body 31a, the materials required for preparing the insulator body 31a can be reduced without interfering with the fitting relationships between the remaining structures of the insulator body 31a and other components, thereby reducing the weight of the insulator body 31a, and facilitating the lightweight of the insulation assembly 100a.

In a possible embodiment, as illustrated in FIG. 11, the insulator 30a can further include at least one reinforcing rib 36a. The at least one reinforcing rib 36a is disposed at a bottom wall of the U-shaped groove 316a, and the at least one reinforcing rib 36a is located in a bend region of the U-shaped groove 316a. It can be understood that, by providing the reinforcing rib 36a inside the U-shaped groove 316a, the strength of the inner wall of the U-shaped groove 316a can be improved without increasing the wall thickness of the U-shaped groove 316a. At the same time, the insulator 30a is prevented from being distorted and deformed due to the uneven distribution of the stress, which is caused by the uneven thickness of the second end 314a due to the arrangement of the U-shaped groove 316a. It is ensured that the space enclosed by the U-shaped groove 316a will not be retracted during the use of the insulation assembly 100a, and the reliability is good. Exemplarily, multiple reinforcing ribs 36a may be provided, and the multiple reinforcing ribs 36a are disposed at intervals along an extending direction of the U-shaped groove 316a. The depth of the U-shaped groove 316a relative to the second surface 312a can be within a range of 0.25 mm -3.85 mm (including end values of 0.25 mm and 3.85 mm). By setting the depth at which the U-shaped groove 316a is recessed with respect to the second surface 312a to be within the foregoing range, the weight of the insulator 30a can be reduced on the basis of satisfying the structural strength of the insulator 30a.

Further, a height of the reinforcing rib 36a may be less than the depth of the U-shaped groove 316a relative to the second surface 312a. In this arrangement, the reinforcing rib 36a does not exceed outside the U-shaped groove 316a, thus preventing warpage of the insulator 30a when being assembled with other components, thereby being beneficial to improve the flatness of the insulator 30a.

Reference is made to Figs. 9 and 10, a hollow hole 317a is further defined at the second end 314a, and the hollow hole 317a extends through the first surface 311a and the second surface 312a of the insulator body 31a in the Z direction. The hollow hole 317a is used to expose the stimulus-response member 2610. Specifically, the hollow hole 317a can expose the protrusion 2612 and a part of the stimulus-response member body 2611.

It may be understood that, when the energy storage device 200 is overcharged, excessive heat or increasing internal pressure inside the energy storage device 200 due to decomposition of the electrolyte may lead to fire or explosion of the energy storage device 200. Thus, by providing the stimulus-response member 2610, before the energy storage device 200 is out of control, a connecting part between the cell 220 and the terminal post 10a (between the positive tab and the positive terminal post, or between the negative tab and the negative terminal post) may be cut off by using the stimulus-response member 2610, so as to prevent the energy storage device 200 from being charged continuously.

Specifically, when the energy storage device 200 is normally charged under a normal temperature, the pressure inside the energy storage device 200 is less than a preset threshold value, the stimulus-response member body 2611 maintains a natural state, and a protruding direction the stimulus-response member body 2611 is towards the lower plastic 240. When the energy storage device 200 is overcharged, the pressure inside the energy storage device 200 is greater than the preset threshold, and the stimulus-response member body 2611 is flipped under the action of the pressure inside the energy storage device 200, and the protruding direction of the stimulus-response member body 2611 is converted from being towards the lower plastic 240 to being towards the insulator assembly 100a, As such, the protrusion 2612 connected to the stimulus-response member body 2611 contacts the pressing block 20a, so that the stimulus-response member 2610 is electrically connected to the pressing block 20a, and then short-circuits the internal circuit of the energy storage battery. However, a large short-circuit current can blow a fuse in a main loop of the energy storage device 200, an overcharging state of the energy storage device 200 is stopped, and safety of the energy storage device 200 in overcharging is improved.

In one possible embodiment, as illustrated in FIG. 8, a diameter L1 of the hollow hole 317a is greater than a diameter L2 of the protrusion 2612, and the diameter L1 of the hollow hole 317a is less than a diameter L3 of the stimulus-response member body 2611. It may be understood that, because the diameter L1 of the hollow hole 317a is less than the diameter L3 of the stimulus-response member body 2611, a part of the stimulus-response members 2610 may be blocked by the lower plastic 240, so that the lower plastic 240 may exert a certain limiting effect on the stimulus-response members 2610 and prevent the stimulus-response members 2610 from contacting the pressing block 20a due to displacement and shaking of the stimulus-response members 2610 in a normal state, which may result in that the normal charging state of the energy storage device 200 is terminated. In addition, because the diameter L1 of the hollow hole 317a is greater than the diameter L2 of the protrusion 2612, when the stimulus-response member 2610 is flipped, the protrusion 2612 may smoothly penetrate through the hollow hole 317a and contact the pressing block 20a, so that the stimulus-response member 2610 is electrically connected to the pressing block 20a, thereby preventing the energy storage device 200 from being further charged.

Reference is made to Figs. 8, 9 and 10 together, the second limiting portion 32a is disposed on the first surface 311a, and the second limiting portion 32a surrounds an outer periphery of the insulator body 31a along the circumferential direction of the insulator body 31a and protrudes from the insulator body 31a. In other words, in the Z direction, the second limiting portion 32a protrudes relative to the insulator body 31a. Exemplarily, a height H2 of the second limiting portion 32a protruding from the first surface 311a is in a range of 0.5 mm to 5.5 mm (including end values of 0.5 mm and 5.5 mm). For example, the height H2 of the second limiting portion 32a protruding from the first surface 311a may be 1.2 mm. It can be understood that, the lower limit of the height H2 of the second limiting portion 32a protruding from the first surface 311 is set to 0.5 mm, so that the second limiting portion 32a and the insulator body 31a can cooperatively define an accommodating groove W1 for installing the pressing block 20a, thereby achieving a certain limiting effect when installing the pressing block 20a. The upper limit of the height H2 of the second limiting portion 32a protruding from the first surface 311 is set to 5.5 mm, so that the protruding from extent of the second limiting portion 32a relative to the insulator body 31a is not too large, and therefore, after the pressing block 20a and the insulator 30a are assembled, the electrical connection between the pressing block 20a and the device outside the energy storage device 200 is not affected.

In addition, a thickness of the second limiting portion 32a may be in a range of 0.4 mm to 2.8 mm (including end values of 0.4 mm and 2.8 mm). It can be understood that, the lower limit of the thickness of the second limiting portion 32a is set to 0.4 mm, so that the second limiting portion has a sufficient thickness to ensure the insulation performance of the insulator 30a. The upper limit of the thickness of the second limiting portion 32a is set to 2.8 mm, so that the thickness of the second limiting portion is not too thick, and the second limiting portion will not shrink and deform after injection molding and cooling.

The second limiting portion 32a and the insulator body 31a may cooperatively define an accommodating groove W1 for accommodating the pressing block 20a, and the accommodating groove W1 is in communication with both the terminal post through-hole 315a and the hollow hole 317a. It can be understood that, by providing the second limiting portion 32a and disposing the second limiting portion 32a along the outer periphery of the insulator body 31a, the second limiting portion 32a and the insulator body 31a can cooperatively define the accommodating groove W1 for accommodating the pressing block 20a. When the pressing block 20a is placed in the accommodating groove W1, the second limiting portion 32a can abut against the outer periphery of the pressing block 20a, thereby limiting the movement of the pressing block 20a in the length direction of the insulator 30a and in the width direction of the insulator 30a, and achieving a good limiting effect.

The cover portion 35a is connected to a part of the second limiting portion 32a located at the second end 314a. The cover portion 35a, the second limiting portion 32a, and the insulation body 31a cooperatively define a cavity 318a. That is, the cavity 318a is a part of the second limiting portion 32a, and a part of the accommodating groove W1 may form a part of the cavity 318a. The cavity 318a is in communication with the hollow hole 317a, and the cavity 318a can accommodate the extension portion 22a of the pressing block 20a. It can be understood that, since the cover portion 35a covers the part of second limiting portion 32a located at the second end 314a, the cover portion 35a, the second limiting portion 32a, and the insulator body 31a can cooperatively define an insertion port for inserting the extension portion 22a of the pressing block 20a. When the extension portion 22a of the pressing block 20a is inserted into the cavity 318a, the cover portion 35a can cooperate with the insulator body 31a to limit the movement of the extension portion 22a of the pressing block 20a in the height direction of the insulator 30a. Thus, the cover portion 35a can cooperate with the second limiting portion 32a to further play a limiting role, thereby ensuring that the position of the pressing block 20a is fixed without shaking or shifting.

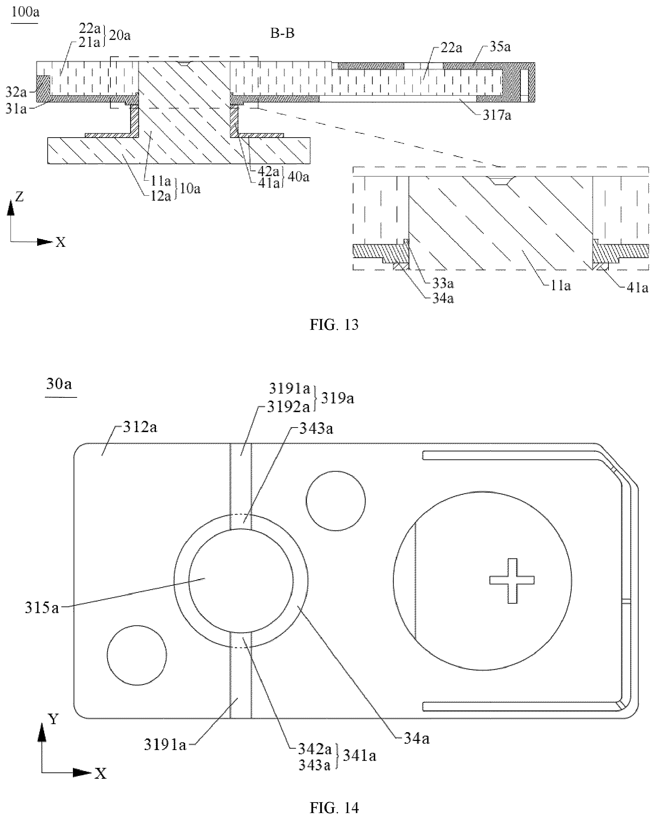

Reference is made to Figs. 9, 12 and 13, where FIG. 12 is a partial schematic structural view of the insulation assembly 100a illustrated in FIG. 5, and FIG. 13 is a schematic cross-sectional view taken along cut line B-B illustrated in FIG. 11.

When the pressing block 20a is placed in the accommodating groove W1, the connection portion 21a of the pressing block 20a is exposed to the external environment, so that the pressing block 20a can serve as an electrode terminal of the energy storage device 200 to facilitate the electrical connection between the energy storage device 200 and other devices. The extension portion 22a of the pressing block 20a is located in the cavity 318a, and the hollow hole 317a can expose a part of the extension portion 22a, so that when the energy storage device 200 is in an overcharge state, the protrusion 2612 of the stimulus-response member 2610 passes through the hollow hole 317a to contact the extension portion 22a of the pressing block 20a located inside the cavity 318a.

Reference is made to Figs. 8, 9 and 10 together, the first limiting portion 33a is disposed on the first surface 311a, and the first limiting portion 33a surrounds an outer periphery of the terminal post through-hole 315a and protrudes from the outer periphery of the terminal post through-hole 315a along a circumferential direction of the terminal post through-hole (315a). In other words, in the Z direction, the first limiting portion 33a protrudes relative to the insulator body 31a. When the terminal post 10a passes through the terminal post through-hole 315a, the first limiting portion 33a circumferentially wraps a part of the outer peripheral surface of the terminal post 10a in the axial direction. It can be understood that, by providing the first limiting portion 33a in the circumferential direction of the terminal post through-hole 315a, the terminal post 10a can contact the first limiting portion 33a when the terminal post 10a passes through the terminal post through-hole 315a. The first limiting portion 33a is pressed by the terminal post 10a to be deformed, so that the first limiting portion 33a is flipped and deformed towards a passing-out direction of the terminal post 10a, so that the first limiting portion 33a tightly wraps a part of the outer peripheral surface of the terminal post 10a, so as to increase the connection strength between the terminal post 10a and the insulator 30a. Therefore, a tight and reliable connection between the first limiting portion 33a and the terminal post 10a in enabled, which facilitates further improving the overall sealing performance of the insulation assembly 100a. In addition, by providing the first limiting portion 33a, the position-limiting and fixing effect of the insulator 30a on the terminal post 10a can be further enhanced, and the risk of misalignment when the terminal post 10a and the insulator 30a are assembled is reduced.

Exemplarily, in a thickness direction of the insulator 30 a (i. e. the Z direction), a height H1 of the first limiting portion 33 protruding from the first surface 311a ranges from 0.1 mm to 3 mm (including end values of 0.1 mm and 3 mm). With this arrangement, a sufficient contact area between the first limiting portion 33a and the terminal post 10a is ensured, so that the matching between the insulator 30a and the terminal post 10a is more compact and reliable, thereby sufficiently reducing a misalignment of the terminal post 10a during assembly, ensuring a sealing effect of the insulation assembly 100a, reducing the leakage of gas and liquid from the insulation assembly 100a, and ensuring safety performance of the battery. In addition, the thickness range value D1 of the first limiting portion 33a may be between 0.01 mm and 0.6 mm (including end values of 0.01 and 0.6 mm). With this arrangement, the first limiting portion 33a can have sufficient wrapping force when being assembled with the terminal post 10a, and can sufficiently contact the terminal post 10a.

Reference is made to Figs. 9 and 10 again, the first limiting portion 33a has elasticity, one end of the first limiting portion 33a away from the insulator body 31a is enlarged by the terminal post 10a, and the one end of the first limiting portion 33a away from the insulator body 31a wraps a part of the outer peripheral surface of the terminal post 10a. That is, when the insulator 30a and the terminal post 10a are assembled in position, the upper end of the first limiting portion 33a is in a tensioned state. In this arrangement, the first limiting portion 33a can be elastically deformed when being pressed by the terminal post 10a so as to be opened outward, so that an end of the first limiting portion 33a away from the insulator body is in an open state and tightly wraps a part of the outer peripheral surface of the terminal post 10a, thereby enabling good sealing performance between the terminal post 10a and the insulator 30a.

In embodiments of the present disclosure, the height H2 of the second limiting portion 32a protruding from the first surface 311a can be greater than the height H1 of the first limiting portion 33a protruding from the first surface 311a. With this arrangement, the second limiting portion 32a can have a sufficient protruding from height relative to the first limiting portion 33a, so that the second limiting portion 32a can have a sufficient contact area with the pressing block 20a, thereby effectively limiting the movement of the pressing block in the direction parallel to the insulator body 31a. Exemplarily, a difference between the height H2 of the second limiting portion 32a protruding from the first surface 311a and the height H1 of the first limiting portion 33a protruding from the first surface 311a may be in a range of 0.1 mm to 3.5 mm (inclusive of the end values of 0.1 mm and 3.5 mm). With this arrangement, both the sealing performance of the terminal post 10a and the creepage distance between the pressing block 20a and the smooth aluminum sheet 250 can be improved, thereby improving the safety performance of the energy storage device 200.

Reference is made to Figs. 10 and 13 in combination, the third limiting portion 34a is disposed on the second surface 312a, and the third limiting portion 34a surrounds a periphery of the terminal post through-hole 315a and protrudes from the periphery of the terminal post through-hole 315a along the circumferential direction of the terminal post through-hole 315a. In other words, the third limiting portion 34a protrudes relative to the insulator body 31a in the Z direction, and the cross-sectional area of the third limiting portion 34a is greater than the cross-sectional area of the first sealing portion 41a of the sealing ring 40a. That is, the projection of the first sealing portion 41a of the seal ring 40a onto the third limiting portion 34a falls within the third limiting portion 34a. The cross-sectional area is a cross-sectional area taken along a plane parallel to the third limiting portion 34a. It can be understood that, by providing the third limiting portion 34a, the third limiting portion 34a can closely abut against the first sealing portion 41a of the sealing ring 40a, which sufficiently ensures the contact area between the third limiting portion 34a and the sealing ring 40a, and improves the connection strength between the whole sealing ring 40a and the insulator 30a. The third limiting portion 34a can also press the sealing ring 40a in coordination with the terminal post 10a from both sides of the sealing ring 40a in the thickness direction (i. e. Z direction) of the sealing ring 40a, thereby effectively improving the sealing performance of the whole insulation assembly 100a.

In a possible embodiment, reference is made to FIG. 14, where FIG. 14 is another schematic structural view of the insulator 30a illustrated in FIG. 7.

The third limiting portion 34a defines a notch 341a, and the notch 341a is in communication with the terminal post through-hole 315a. A connection groove 319a is further defined in the second surface 312a of the insulator body 31a, and the connection groove 319a is recessed from the second surface 312a of the insulator body 31a to the first surface 311a of the insulator body 31a. The connection groove 319a communicates the notch 341a with the periphery of the second surface 312a of the insulation assembly 100a. It may be understood that, by enabling the notch 341a to be in communication with the connection groove 319a, the notch 341a and the connection groove 319a cooperatively define an exhaust passage so as to communicate the terminal post through-hole 315a with the external environment. Thus, when the insulation assembly 100a is riveted and pressed, the air between the guide sealing ring 40a and the insulator 30a can be guided to be discharged to the external environment through the exhaust passage defined by the notch 341a and the connection groove 319a, so that the insulation assembly100a can be vented smoothly, the problem of poor airtightness of the insulation assembly 100a caused by local air bubbles in the insulation assembly100a is avoided, and the sealing performance of the insulation assembly100a is effectively improved.

Exemplarily, as illustrated in FIG. 14, the notch 341a may include a first notch 342a and a second notch 343a, and the connection groove 319a may include a first connection groove 3191a and a second connection groove 3192a. The first notch 342a is spaced apart from the second notch 343a in a width direction of the insulator 30 a (i. e., Y direction), and the first notch 342a and the second notch 343a are also symmetrically disposed. The first connection groove 3191a and the second connection groove 3192a are spaced apart, and the first connection groove 3191a and the second connection groove 3192a are also symmetrically disposed. The first connection groove 3191a communicates the first notch 342a with the periphery of the second surface 312a of the insulation assembly 100a, and the second connection groove 3192a communicates the second notch 343a with the periphery of the second surface 312a of the insulation assembly 100a. Thus, the first notch 342a and the first connection groove 3191a may cooperatively define one exhaust passage, and the second notch 343a and the second connection groove 3192a may cooperatively define another exhaust passage. The two exhaust passages are symmetrically disposed, so that the two exhaust passages have a better structure consistency, and air between the sealing ring 40a and the insulator 30a can be discharged from two sides of the insulator 30a in a width direction, respectively. In this way, the discharging process of the insulation assembly 100a is uniform.

In this embodiment, the lower plastic 240, the smooth aluminum sheet 250, and the insulation assembly 100 are stacked in sequence, and the post body 11a of the terminal post 10 a passes through the first through-hole 2410 of the lower plastic 240, the third through-hole 2523 of the smooth aluminum sheet 250, the terminal post through-hole 315a of the insulation 30 a, and the pressing block 20a in turn. The base 12a of the terminal post 10a is connected to an adapter (not illustrated) and the cell 220, and one end of the terminal post 10a away from the base 12a is connected to the pressing block 20a, thereby forming a connection path between the energy storage device 200 and an external circuit.

Reference is made to FIG. 8 again, in embodiments of the present disclosure, the insulation assembly 100b may include a terminal post 10 b, a pressing block 20 b, an insulator 30b, and a sealing ring 40 b. The terminal post 10 b, the pressing block 20 b, the insulator 30 b, and the sealing ring 40 b in the insulation assembly 100b are a negative post, a negative pressing block, a negative insulator, and a negative sealing ring on a negative insulation assembly side. For a basic structure of each component in the insulator 30b, connection relationships among various components, and connection relationships between the various component and a component outside the component, reference may be made to a related design of the insulator 100a, which will not be elaborated in detail herein. The insulation assembly 100b and the insulation assembly 100a may be the same in the detailed structure or position arrangement of the components, and may also be different, which is not specifically limited in the present disclosure.

Unless otherwise defined, all technical and scientific terms used herein have the same meaning as commonly understood by one of ordinary skill in the art to which this application belongs. The terms used herein are for the purpose of describing particular embodiments only and are not intended to be limiting of the disclosure. The terms "including" and "having" and any variations thereof in the description, claims, and drawings of the present disclosure, are intended to cover a non-exclusive inclusion.

In the description of embodiments of the present disclosure, the technical terms "first" and "second" are only used for distinguishing different objects, and cannot be understood as indicating or implying relative importance or implicitly indicating the number, a specific order, or a primary relationship of an indicated technical feature. In the description of embodiments of the present disclosure, "multiple" means two or more than two, unless specified otherwise.

A term "embodiment" referred to herein means that a particular feature, structure, or characteristic described in conjunction with embodiments may be contained in at least one embodiment of the present disclosure. The phrase appearing in various places in the specification does not necessarily refer to the same embodiment, nor does it refer an independent or alternative embodiment that is mutually exclusive with other embodiments. It is expressly and implicitly understood by those skilled in the art that an embodiment described herein may be combined with other embodiments.

In the description of embodiments of the present disclosure, the term "and/or" is merely an association relationship for describing associated objects, indicating that three relationships may exist. For example, "A and/or B" may indicate that A exists, A and B exist simultaneously, and B exists. In addition, the character "/" in this specification generally indicates that the associated objects are in an "or" relationship.

In the description of embodiments of the present disclosure, the orientation or position relationships indicated by the technical terms "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. are based on the orientation or position relationships illustrated in the drawing, which is only for the convenience of describing embodiments of the present disclosure and simplifying the description, rather than indicating or implying that the indicated device or component must have a specific orientation, be constructed and operated in a specific orientation. Therefore, embodiments of the present disclosure should not be construed as being limited thereto.

In the description of the embodiments of the present application, unless specified or limited otherwise, terms such as "mounted", "connected", "coupled", and "fixed" may be understood broadly, and may be, for example, a fixed connection, a detachable connection, or an integral connection; may also be a mechanical or electrical connection; may also be a direct connection or an indirect connection via an intermediate medium; may also be an inner communication of two components or an interaction relationship between two components. A person of ordinary skill in the art may understand the specific meanings of the above terms in embodiments of the present disclosure according to specific situations.

Finally, it may be noted that the above embodiments are merely used for illustrating rather than limiting the technical solutions of the present disclosure; and although the present disclosure has been described in detail with reference to the preferred embodiments, those skilled in the art may understand that modifications or equivalent substitutions may be made to the technical solutions of the present disclosure without departing from the spirit and scope of the technical solutions of the present disclosure.

## Claims

1. An insulation assembly (100a), comprising a pressing block (20a), a terminal post (10a), and an insulator (30a), wherein the insulator (30a) comprises an insulator body (31a) and a first limiting portion (33a), the insulator body (31a) has a first surface (311a) and a second surface (312a) disposed opposite to each other in a thickness direction of the insulator body (31a), the first surface (311a) is a surface facing the pressing block (20a), the insulator body (31a) defines a terminal post through-hole (315a) extending through the first surface (311a) and the second surface (312a), the first limiting portion (33a) is disposed on the first surface (311a), the first limiting portion (33a) surrounds an outer periphery of the terminal post through-hole (315a) and protrudes from the outer periphery of the terminal post through-hole (315a) along a circumferential direction of the terminal post through-hole (315a), the terminal post (10a) passes through the terminal post through-hole (315a), and the first limiting portion (33a) circumferentially wraps a part of an outer peripheral surface of the terminal post (10a) in an axial direction.

2. The insulation assembly (100a) of claim 1, wherein in the thickness direction of the insulator body (31a), a height (H1) of the first limiting portion (33a) protruding from the first surface satisfies 0.1 mm≤H1≤3 mm.

3. The insulation assembly (100a) of claim 1, wherein a thickness (D1) of the first limiting portion (33a) satisfies 0.01 mm ≤ D1 ≤ 0.6 mm.

4. The insulation assembly (100a) of claim 1, wherein the first limiting portion (33a) is elastic, one end of the first limiting portion (33a) away from the insulator body (31a) is enlarged by the terminal post (10a), and the one end of the first limiting portion (33a) away from the insulator body (31a) wraps the part of the outer peripheral surface of the terminal post (10a).

5. The insulation assembly (100a) of claim 1, wherein the insulator (30a) further comprises a second limiting portion (32a), the second limiting portion (32a) surrounds a periphery of the insulator body (31a) and protrudes from the first surface (311a) of the insulator body (31a) along a circumferential direction of the insulator body (31a), and the second limiting portion (32a) and the insulator body (31a) cooperatively define an accommodating groove (W1) for accommodating the pressing block (20a).

6. The insulation assembly (100a) of claim 5, wherein in the thickness direction of the insulator body (31a), a height (H2) of the second limiting portion (32a) protruding from the first surface (311a) satisfies 0.5 mm ≤H2≤5.5 mm.

7. The insulation assembly (100a) of claim 5, wherein a height (H2) of the second limiting portion (32a) protruding from the first surface (311a) is greater than a height (H1) of the first limiting portion (33a) protruding from the first surface (311a).

8. The insulation assembly (100a) of claim 7, wherein a difference between the height (H2) of the second limiting portion (32a) protruding from the first surface (311a) and the height (H1) of the first limiting portion (33a) protruding from the first surface (311a) satisfies 0.1 mm ≤H2-H1 ≤3.5 mm.

9. The insulation assembly (100a) of claim 1, wherein the insulator (30a) further comprises a third limiting portion (34a), the third limiting portion (34a) is disposed on the second surface (312a), and the third limiting portion (34a) surrounds a periphery of the terminal post through-hole (315a) and protrudes from the periphery of the terminal post through-hole (315a) along the circumferential direction of the terminal post through-hole (315a); and
the insulation assembly (100a) further comprises a sealing ring (40a), the sealing ring (40a) is sleeved on an outer periphery of the terminal post (10a), and the sealing ring (40a) abuts against the third limiting portion (34a).

10. The insulation assembly (100a) of claim 9, wherein the third limiting portion (34a) defines a notch (341a), the notch (341a) is in communication with the terminal post through-hole (315a), the second surface (312a) defines a connection groove (319a), and the connection groove (319a) communicates the notch (341a) with a periphery of the second surface (312a) of the insulation assembly (100a).

11. The insulation assembly (100a) of claim 10, wherein the notches (341a) comprise a first notch (342a) and a second notch (343a), the first notch (342a) and the second notch (343a) are spaced apart and disposed symmetrically in a width direction of the insulator body (31a), the connection groove (319a) comprises a first connection groove (3191a) and a second connection groove (3192a), the first connection groove (3191a) communicates the first notch (342a) with the periphery of the second surface (312a) of the insulation assembly (100a), and the second connection groove (3192a) communicates the second notch (343a) with the periphery of the second surface (312a) of the insulation assembly (100a).

12. The insulation assembly (100a) of claim 5, wherein the insulator body (31a) further comprises a cover portion (35a), the insulator body (31a) comprises a first end (313a) and a second end (314a) disposed opposite to each other in a length direction of the insulator body (31a), the terminal post through-hole (315a) is defined closed to the first end (313a), and the cover portion (35a) is connected to a part of the second limiting portion (32a) located at the second end (314a); the cover portion (35a), the second limiting portion (32a), and the insulator body (31a) corporately define a cavity (318a), the cavity (318a) is a part of the second limiting portion (32a); and a hollow hole (317a) extending through the first surface (311a) and the second surface (312a) is defined closed to the second end (314a), and the hollow hole (317a) is in communication with the cavity (318a).

13. The insulation assembly (100a) of claim 12, wherein a U-shaped groove (316a) is defined in the second surface (312a), the U-shaped groove (316a) is located at the second end (314a), the U-shaped groove (316a) is located outside a periphery of the hollow hole (317a), and the U-shaped groove (316a) is bent and extends along a circumferential direction of the second end (314a).

14. The insulation assembly (100a) of claim 13, wherein the insulation body (31a) further comprises at least one reinforcing rib (36a), the at least one reinforcing rib (36a) is disposed on a bottom wall of the U-shaped groove (316a), and the at least one reinforcing rib (36a) is located in a bend region of the U-shaped groove (316a).

15. The insulation assembly (100a) of claim 14, wherein a height of each of the at least one reinforcing rib (36a) is less than a depth of the U-shaped groove (316a) relative to the second surface (312a).

16. An end cover assembly, comprising the insulation assembly (100a) of any one of claims 1 to 11.

17. The end cover assembly of claim 16, further comprising a stimulus-response member (2610), wherein the stimulus-response member (2610) and the insulation assembly (100a) are stacked, the stimulus-response member (2610) comprises a stimulus-response member body (2611) and a protrusion (2612), and the protrusion (2612) protrudes from the stimulus-response member body (2611);
the insulator body (31a) comprises a first end (313a) and a second end (314a) disposed opposite to each other in a length direction of the insulator body (31a), the terminal post through-hole (315a) is closed to the first end (313a), a hollow hole (317a) extending through the first surface (311a) and the second surface (312a) is defined closed to the second end (314a), the hollow hole (317a) is in communication with the accommodating groove (W1), and the hollow hole (317a) is used for the stimulus-response member (2610) to pass through; and
a diameter (L1) of the hollow hole (317a) is greater than a diameter (L2) of the protrusion (2612), and the diameter (L1) of the hollow hole (317a) is less than a diameter (L3) of the stimulus-response member body (2611).

18. An end cap assembly, comprising the insulation assembly (100a) of any one of claims 12 to 15.

19. The end cover assembly of claim 18, further comprising a stimulus-response member (2610), wherein the stimulus-response member (2610) and the insulation assembly (100a) are stacked, the stimulus-response member (2610) comprises a stimulus-response member body (2611) and a protrusion (2612), and the protrusion (2612) protrudes from the stimulus-response member body (2611); and
the hollow hole (317a) is used for the stimulus-response member (2610) to pass through.

20. An energy storage device (200), comprising the end cover assembly of any one of claims 16 to 19.

21. An electric device (300), comprising the energy storage device (200) of claim 20.
